# EUROPEAN PATENT APPLICATION

(11) **EP 4 730 263 A1**
(43) Date of publication of application: **22.04.2026**
(21) Application number: 24306739.4
(22) Date of filing: 18.10.2024
(51) Int. Cl.: G06T 9/00, G06N 3/0455, H04N 19/597

(54) **MICRO PATCH TRANSPOSED CONVOLUTIONS FOR POINT CLOUD ATTRIBUTE COMPRESSION**

(71) Applicant: InterDigital CE Patent Holdings, SAS, 75017 Paris (FR)
(72) Inventor: BORBA PINHEIRO, Rodrigo, 35700 RENNES (FR); MARVIE, Jean-Eudes, 22190 PLERIN (FR); VALENZISE, Giuseppe, 94250 GENTILLY (FR); DUFAUX, Frederic, 92000 NANTERRE (FR)
(74) Representative: Vossius & Partner Patentanwälte Rechtsanwälte mbB

(57) **Abstract**

In an example point cloud attribute coding method, a plurality of micropatches are obtained. Each micropatch has a plurality of pixels, and at least one pixel of each micropatch is associated with a respective point in a point cloud. Each pixel that is associated with a respective point has a pixel feature value. A first point in the point cloud is associated with respective pixels in each of a first plurality of the micropatches. These associated pixels in the first plurality of the micropatches have a first plurality of pixel feature values. A point feature value is determined for the first point by calculating a weighted sum of the first plurality of pixel feature values.

## Description

### BACKGROUND

The present application is related to point clouds. The use of 3D applications is growing, and to be able to exploit such applications, different data formats are being used. One of the main data formats is the point cloud. Point clouds (PCs) are a set of unordered points with coordinates x, y, z, corresponding to the location of the point in the space. Attributes such as colors, normal vectors, and the like may also be provided for the points.

The use of new types of point cloud data calls for the creation of new compression methods to efficiently store and transmit data, especially since point clouds can have millions of points.

Different methods to compress the attributes have been proposed, including some using learning based architectures. Those architectures are often extensions of learning-based methods that were already explored in the 2D image domain.

The use of Variational Auto Encoders (VAEs) and Normalizing Flows (NFs) as compression architectures have been explored in the point cloud domain. VAEs are described, for example, in J. Wang, Z. Ma, H. Wei, Y. Yu, V. Zakharchenko and D. Wang, [AI-3DGC] Point Cloud Attribute Compression using Sparse Tensor-Representation, Moving Pictures Expert Group, 2022. NFs are described, for examle, in R. Borba Pinheiro, J.-E. Marvie, G. Valenzise and F. Dufaux, "NF-PCAC: Normalizing Flow Based Point Cloud Attribute Compression," in ICASSP 2023 - 2023 IEEE International Conference on Acoustics, Speech and Signal Processing (ICASSP), 2023. However, these methods have some disadvantages when it comes to performance in high bitrates in the VAE case and model size and complexity in the NF case. Besides, none of these methods have been able to match the performance reached by traditional methods.

### SUMMARY

Briefly stated, in one embodiment, a method comprises: obtaining a plurality of micropatches, each micropatch having a plurality of pixels, wherein at least one pixel of each micropatch is associated with a respective point in a point cloud, and wherein each pixel in a micropatch that is associated with a respective point has a pixel feature value, and wherein at least a first point in the point cloud is associated with respective pixels in each of a first plurality of the micropatches, the associated pixels in the first plurality of the micropatches having a first plurality of pixel feature values; and determining a point feature value for the first point by calculating a weighted sum of the first plurality of pixel feature values. An apparatus comprises one or more processors configured to perform any method as described herein.

In some embodiments, all of the first plurality of pixel feature values are weighted equally. In other embodiments, at least two of the plurality of pixel feature values have different weights.

In some embodiments, weights used in calculating the weighted sum are based at least in part on a number of pixel feature values in the first plurality of pixel feature values.

Some embodiments further comprise determining a first number, C, of the first plurality of pixel feature values, and an averaging factor, F, where C>F, and wherein calculating the weighted sum comprises multiplying a sum of the first plurality of pixel feature values by F/C.

In some embodiments, determining the averaging factor, F, comprises selecting, from among a plurality of averaging factors, a greatest averaging factor less than C.

In some embodiments, weights used in calculating the weighted sum are based at least in part on positions within the first plurality of the micropatches of the pixels associated with the first point.

In some embodiments, each of the associated pixels in the first plurality of the micropatches has a corresponding position within the respective micropatch, wherein a number, N, of the associated pixels have a same position in their respective micropatch, and wherein calculating the weighted sum comprises weighting the pixel feature values of the pixels having the same position by 1/N.

In some embodiments, each of the micropatches has a respective center point in the point cloud, and wherein at least one weight used in calculating the weighted sum is based at least in part on a geometric relationship between the first point and the center point of a micropatch. In some such embodiments, wherein the first point is in a first voxel, the center point is in a second voxel, at least one of the weights is based at least in part on whether the first and second voxels are the same voxel, whether the first and second voxels share a face, whether the first and second voxels share an edge, or whether the first and second voxels share a corner.

In some embodiments, for at least a first one of the plurality of micropatches, obtaining the micropatch comprises: obtaining a first micropatch feature value associated with the first micropatch; and determining the pixel feature values for the first micropatch by multiplying the first micropatch feature value by a two-dimensional kernel.

In some embodiments, the first micropatch feature value is a point feature value of a point in a downsampled point cloud.

In some embodiments, obtaining the plurality of micropatches comprises obtaining point cloud geometry information and generating the plurality of micropatches from the point cloud geometry information.

In some embodiments, the point feature value comprises color information for the corresponding point.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 schematically illustrates a 3×3 convolution performed in two dimensions with a stride length of 1.
FIG. 2 schematically illustrates a 3×3 convolution performed in two dimensions with a stride length of 2.
FIG. 3 schematically illustrates micropatch convolution as performed in some embodiments. The micropatch is generated from the 3D geometry information. The convolution is performed on the center point with a 2D kernel. This point is then remapped to its previous 3D location on the original geometry.
FIG. 4 schematically illustrates downsampling and the generation and convolution of a micropatch as performed in some embodiments.
FIG. 5 schematically illustrates transposed convolution with stride length of 2.
FIG. 6 schematically illustrates the calculation of pixel feature values and association of those values with micropatch pixels according to some embodiments.
FIG. 7 illustrates the calculation of point attribute values from the pixel features values of FIG. 6 using equal weighting according to an example embodiment.
FIG. 8 illustrates the calculation of point attribute values from the pixel features values of FIG. 6 using unequal weighting according to an example embodiment.
FIG. 9 schematically illustrates the calculation of pixel feature values, the association of those values with micropatch pixels, and the calculation of point attribute values from pixel features values of FIG. 6 using unequal weighting according to an example embodiment.
FIG. 10 is an exploded perspective view of voxels, illustrating an example of different voxel types that may be used in determining the weights of pixel feature values according to an example embodiment.
FIG. 11 is a schematic illustration of micropatch generation according to an example embodiment.
FIG. 12 illustrates example code for the definition of a transposed convolution as used in some embodiments.
FIGs. 13A-13B illustrate example code for the postprocessing of transposed convolutions and determination of pixel feature values according to some embodiments.
FIG. 14 illustrates example code for using a weighted sum to calculate point feature values according to a first type of weighting.
FIG. 15 illustrates example code for using a weighted sum to calculate point feature values according to a second type of weighting.
FIG. 16 illustrates example code for using a weighted sum to calculate point feature values according to a third type of weighting.
FIG. 17 illustrates example code for using a weighted sum to calculate point feature values according to a fourth type of weighting.
FIG. 18 is a flow chart of a method performed in example embodiments.
FIG. 19 is a functional block diagram of a computing device or system on which methods described herein may be implemented.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

One factor that makes the attributes of point clouds difficult to compress is their support. The sparse nature of the data stops the network from learning good context information to learn how to code point clouds. Even architectures that work very well in image compression, when translated to point clouds, lack in performance.

Example embodiments employ a new approach. One difference between an image and the point cloud is the support, which is sparse and 3D in the point cloud case. Example embodiments translate this 3D sparse support into a 2D dense support that is more similar to an image.

Instead of processing the point cloud attributes entirely in three dimensions, example embodiments employ a new approach by modifying the inherent support of the point clouds to more closely resemble the support of an image. The convolutions used in the networks are usually 3x3x3 or 5x5x5, so in many cases it is satisfactory to take a small support to calculate the context for a certain voxel. Example embodiments reduce the 3D problem into a 2D problem by producing micro-patches for each occupied voxel in the point cloud. Example embodiments further reconstruct the point cloud in the decoder side of the network by correctly performing the transposed convolution.

The use of micropatches is described in patent application no. EP 24305212.3, entitled "Micro Patch Convolutions for Point Cloud Attribute Compression," filed 9 February 2024, which is incorporated herein by reference in its entirety. Further details of different techniques for the generation of micropatches are provided in patent application no. EP 24306600.8, entitled "Micro Patch Generation for 3D Point Cloud Surface Description," filed 30 September 2024, which is incorporated herein by reference in its entirety. In example embodiments, a micropatch convolution that acts especially in the encoder side of the network produces the context for coding the point cloud. A micropatch is a 2D square supported by a 3D plane onto which the principal components of the 3D voxel are projected. It thus summarizes the context of the center pixel of the 3D voxel and can be used by traditional 2D convolutional systems. The present disclosure provides systems and methods for computing the transposed convolution, such as a strided transposed convolution that is used to upsample data on the decoder side of the network. These types of convolutions are particularly useful in the case of deep architectures that downsample the data to produce the latent space and then upsample it to reconstruct the original data. Example embodiments are described particularly with reference to point cloud attribute compression (especially point colors), but such embodiments can be used in any type of attributes of a 3D voxel set.

Example embodiments may employ techniques from 2D convolutions for the learning of the weights. These weights will be used in 2D convolutions to generate the array that will be finally compressed using arithmetic coding (AC coding). On the decoder side, example embodiments se the 2D transposed convolutions to obtain attributes of the reconstructed point cloud.

In example embodiments, the downsampling of the geometry (the positions of the points) can be completely controlled as long as it is the same on both the encoder and decoder side of the network.

The use of 2D convolutions instead of 3D sparse convolutions reduces the number of weights in the network and thus reduces the complexity of the framework.

As noted above, details of different techniques for the generation of micropatches are provided in patent application no. EP 24306600.8. Each micropatch has a plurality of pixels, e.g. each micropatch may be a 3×3 or 5×5 array of pixels. Within a micropatch, at least one pixel is associated with a respective point in a point cloud. Each pixel in a micropatch that is associated with a respective point has a pixel feature value. (Not every pixel is necessarily associated with a point.) The association between a pixel and a point in the point cloud may be made using an index of the point. The pixel feature value of a pixel may be determined by a point feature value of the associated point. The point associated with a pixel may be referred to as being projected on the pixel.

A feature value as referred to herein may be but is not limited to a floating point or integer value. A feature value may be, for example, a vector or tensor of values. Analogously, weight values described herein are not limited to single values but may be vectors, tensors, or other algebraic structures. In some embodiments, e.g. in an original (un-downsampled point cloud) a feature value may be a color value (e.g. an R, G, or B value, or a Y, U, or V value) or a tuple of color values. In a point cloud that results from one or more levels of downsampling, the feature value of each point may identify a point in a feature space that provides a reduced-dimension representation of the color information from the preceding level, which may be generated for example from convolution applied to the preceding level.

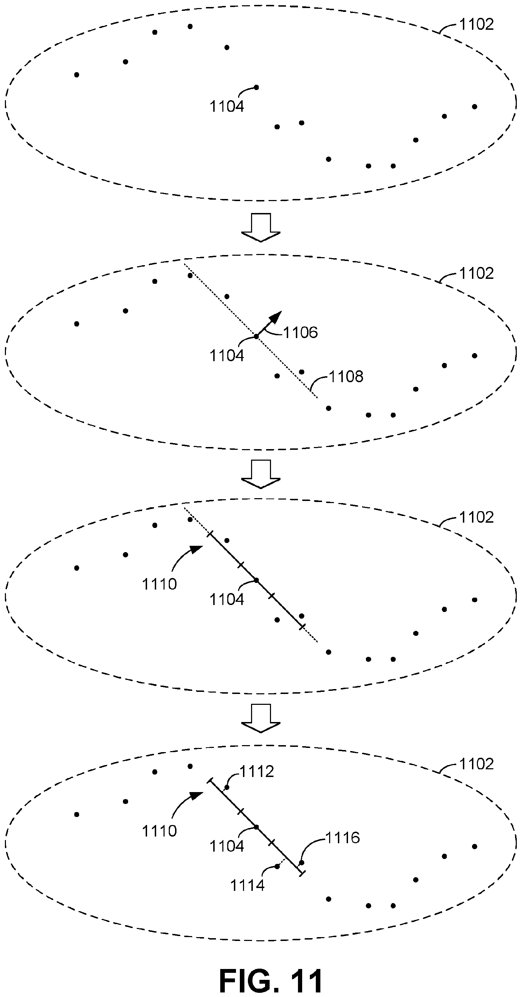

A summary overview of micropatch creation is illustrated in FIG. 11. This example is illustrated in two dimensions, though in example embodiments the method is performed in three dimensions using analogous techniques. In this example, a point cloud 1102 is provided, and a micropatch is to be generated for a selected point 1104. In some embodiments, the point cloud 1102 may be an upsampled point cloud, and the selected point 1104 may be a point that is still present in the downsampled version of that point cloud.

To generate the micropatch, in some embodiments, a local normal 1106 is determined using any of several available methods for estimating a local normal vector in a point cloud. In three dimensions, the position of the point 1104 and the direction of the normal 1106 together define a plane 1108. A micropatch 1110 is positioned in the plane 1108 and as being centered on the selected point 1104. Three pixels are illustrated for micropatch 1110, separated by hash marks. A center pixel of the micropatch 1110 is associated with the selected point 1106. Other points in the point cloud are selected to be associated with other points in the point cloud according to predetermined selection criteria, which may be different in different embodiments. For example, the point 1112 in this example is the only point that has an orthogonal projection onto the top-left pixel of 1110, so it may be associated with that top-left pixel. The points 1114 and 1116 both have orthogonal projections onto the bottom-right pixel of 1110, so the selection criteria may provide for disambiguation in this case. For example, in some embodiments, point 1114 may be associated with the bottom-right pixel because its orthogonal projection is nearest to the center of that pixel. In other embodiments, point 1116 may be associated with the bottom-right pixel because it has a smaller orthogonal distance to that pixel. Various alternative selection criteria may also be used and do not necessarily require orthogonal projection, e.g. a point may be associated with a pixel based on a three-dimensional distance between points and pixel centers.

A micropatch generation technique such as that of FIG. 11 may be repeated for each of the points in the point cloud that are also present in a downsampled version of that point cloud. In some cases, after generation of an initial set of micropatches, there may remain some points from the point cloud that are not associated with any pixel of any micropatch. In some embodiments, new micropatches are generated, e.g. using such unrepresented points as micropatch center points, until all points in the point cloud are associated with at least one pixel of at least one micropatch.

Once a point is associated with a pixel, the feature value or values of that point are in turn associated with that pixel. In some cases, a pixel may not be associated with any point, in which case a null feature value or a padded feature value may be used for that pixel. While an example micropatch creation method is described here, the present disclosure relates primarily to the convolution and transposed convolution of micropatches and is not limited to any particular technique of generating those micropatches in the first place.

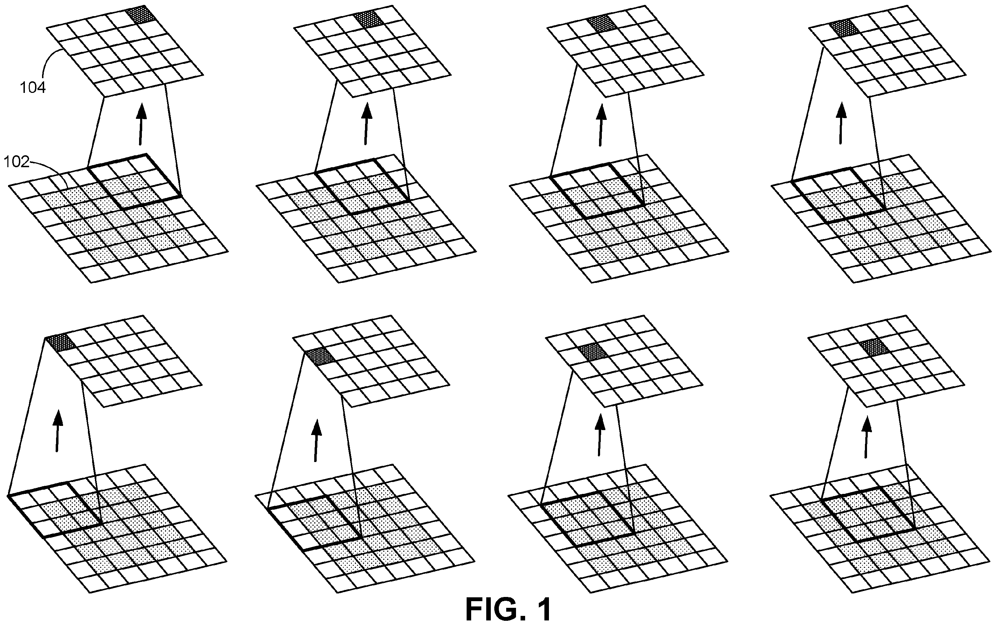

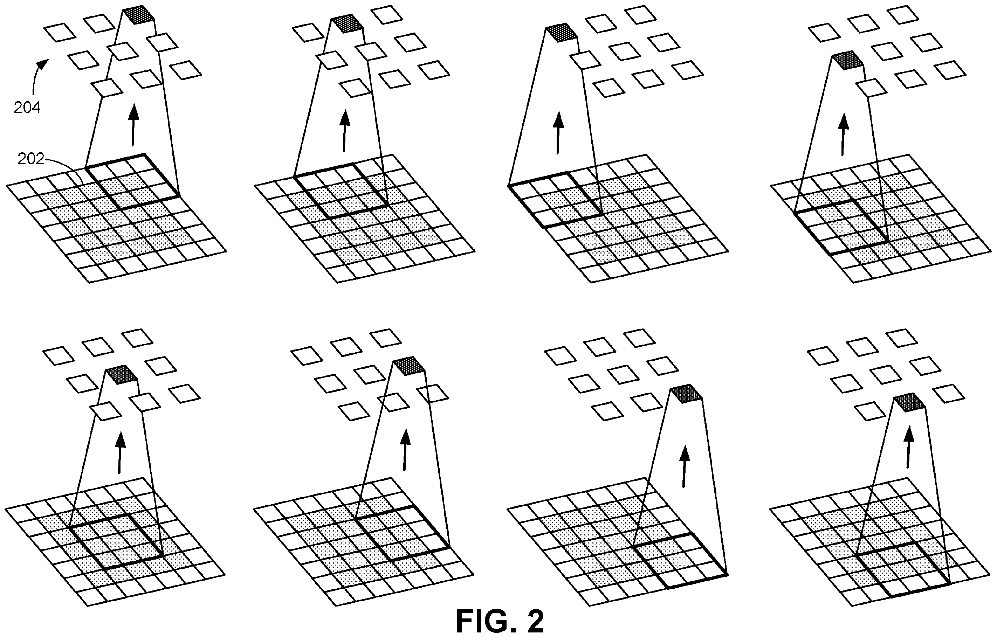

A strided convolution in the 2D domain is mainly a pooling layer that is learned on the network. It downsamples the data by performing the convolution on only certain points instead of performing it on all points, by doing that it can be interpreted as a learned pooling layer. FIG. 1 and FIG. 2 provide illustrations. FIG. 1 depicts a normal non-strided convolution on a 5x5 region 102. A 3×3 filter is slid across the initial features (the grey 5x5 region, 102), performing multiplications and additions to produce each point in the resulting 5x5 output 104 of the convolution.

FIG. 2 depicts a strided convolution on a 5x5 region 202. The convolution is performed only on some of the points, resulting in a downsampled 3×3 output 204 of the convolution.

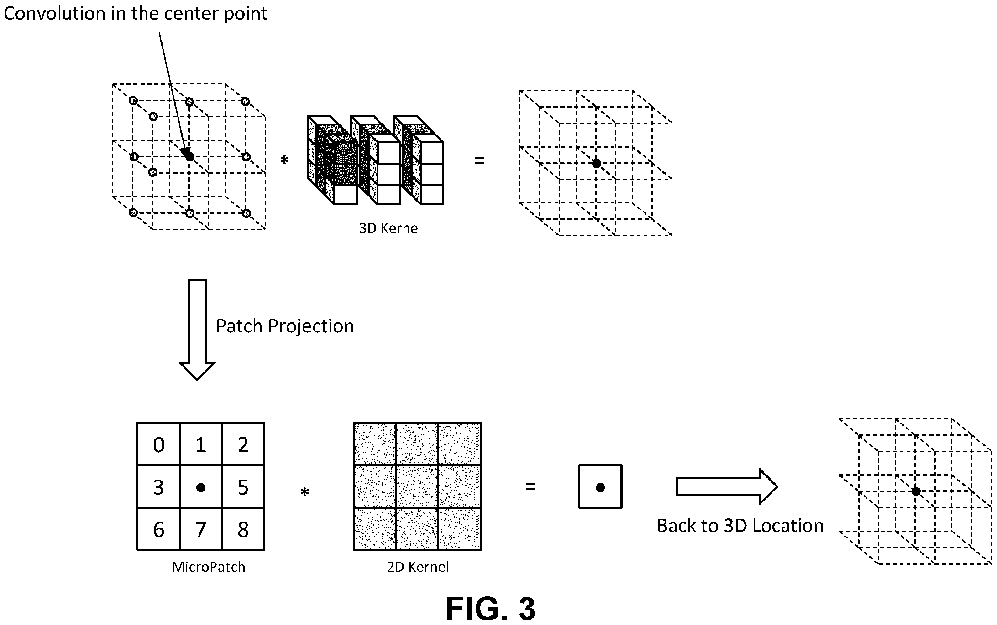

According to example embodiments, patch convolution is performed analogously. However, instead of having a filter sliding through an image, the filter is performing the convolution with the generated micropatch of the point. Instead of having a 3D kernel that is trained on the 3D sparse data, a projection is performed to produce a micropatch, the convolution is performed in the 2D space, as shown in FIG. 3. Shaded blocks in the kernels represent weights that will be trained (e.g. they may be multiplied by an existing voxel in the point cloud), while white blocks represent kernels that did not contribute to result. FIG. 3 provides an illustration of micropatch convolution. The micropatch is generated based on the 3D geometry information. The convolution is performed on the center point with a 2D kernel. This point is then remapped to its previous 3D location on the original geometry.

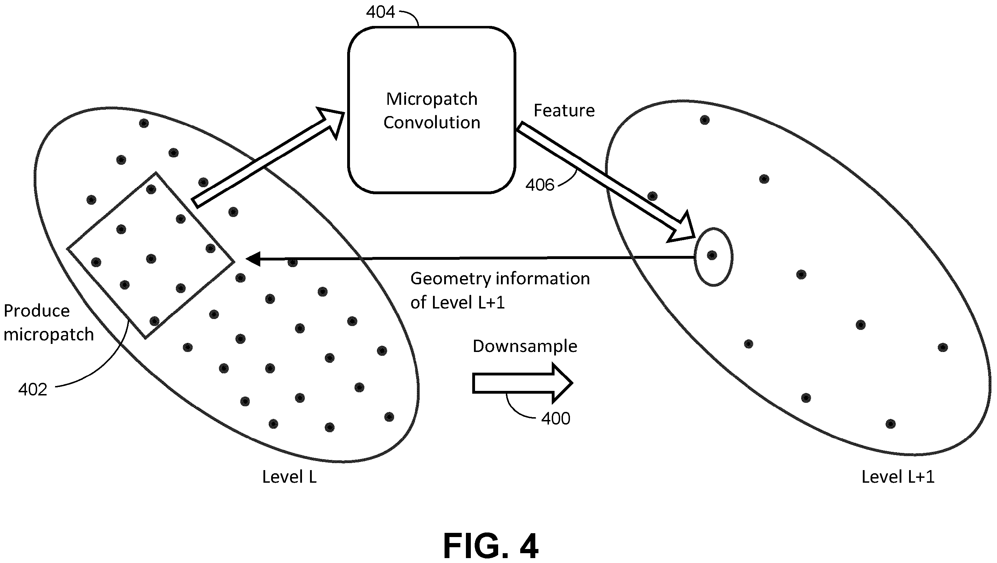

In example embodiments, strided convolution of the micropatches follows the same procedure as in FIG. 2, but in the micropatch space. However, instead of performing a strided convolution in the image domain, a downsampling of the point cloud is performed to obtain the correct locations to perform the convolutions. Downsampling may be performed as illustrated in FIG. 4. At 400, downsampling of the point cloud is performed, e.g. using a decimating downsampling method to produce downsampled level L+1 from level L. For example, downsampling may be performed by taking one point out of two. The downsampled points on downsampled level L+1 are matched with their equivalent on level L. At 402, micropatches are then generated on those points in level L. At 404, the micropatch convolution is performed to produce the features for that point.

As illustrated in FIG. 4, the point cloud is downsampled at 400 to produce the downsampled level L+1. The geometry information on downsampled level L+1 is recovered, using the geometry information of the corresponding points on level L. From these points, the micropatches are produced at 402. At 404, the micropatch convolution is performed to produce the features. At 406, the produced features are associated with the correct position on level L+1.

In this way, the regular convolution is already defined in the micropatch convolution, as well as the strided convolution to perform downsampling of the data. These two types of convolutions will be mainly used in the encoder side of the network.

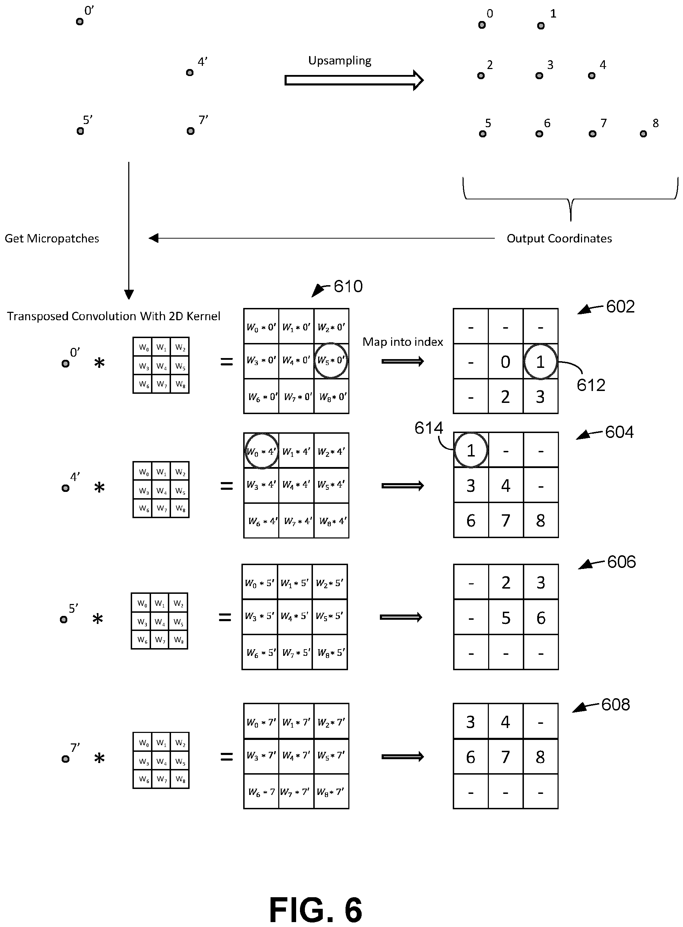

Example embodiments described herein provide techniques for performing upsampling, or the transposed strided convolution, particularly on the decoding side. The upsampling on regular convolutions or on sparse convolutions follows the principle of creating an expanded feature space from one point and assigning this expanded feature space to a certain location on the output data space. When there is more than one point assigned to the same space, their results get added together to produce the result, as shown in FIG. 6. In FIG. 6, after upsampling the point cloud and producing the micropatches on each of the points present, the convolution is performed and the expanded feature space is created, analogous to the creation of an expanded features space for conventional 2D images. With the index of the micropatches, the resulting features are mapped into the points in the 3D space. For example, the resulting feature of point 1, circled in the figure, will be ***W*₅** * **0'** + ***W*₀** * **4**'

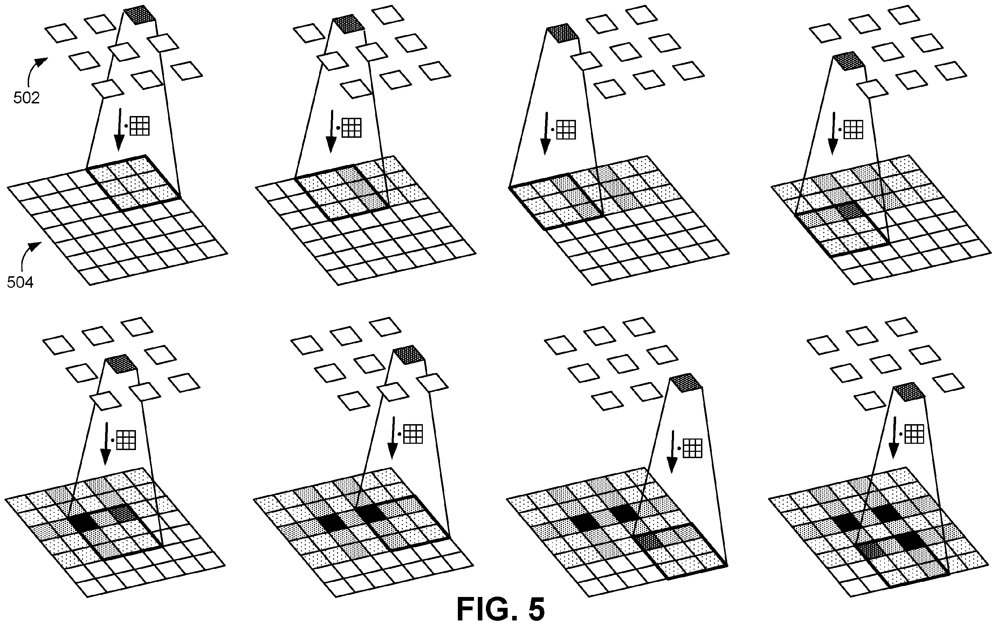

FIG. 5 illustrates a transposed stride convolution in a 2D image. Each point in the convolved data 502 is multiplied by a 2D kernel (of dimensions 3×3 in this example) to create an expanded feature space. These feature spaces will overlap each other to fill the entire space of the upsampled version of the data 504. Where there is an overlap, the values of the overlapping feature spaces are added together (represented schematically by pixels with increasing levels of shading).

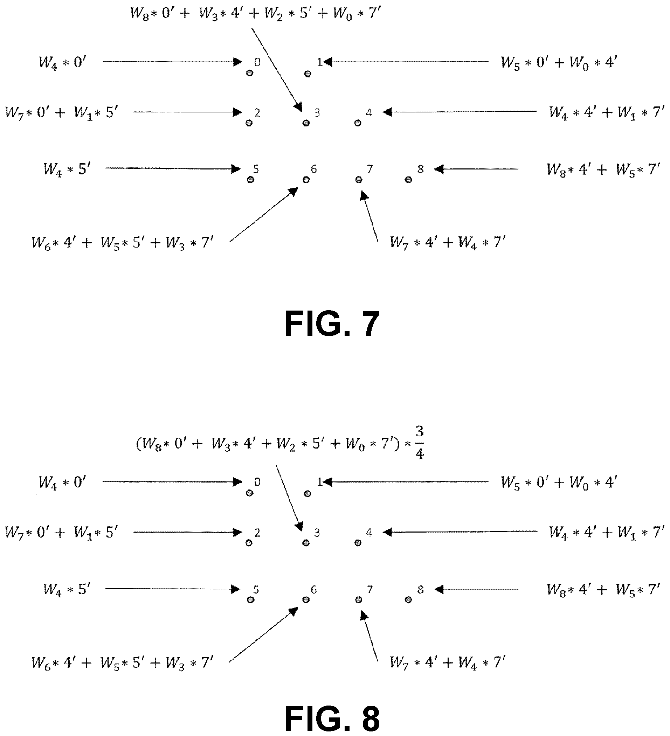

In example embodiments, micropatch convolution includes obtaining the upsampled version of the point cloud and producing patches within the geometry of the upsampled point cloud. A 2D convolution is performed to produce the expanded feature space from each point in the original downsampled version, and the expanded feature space is mapped into the correct space. An example is illustrated in FIG. 7. FIG. 7 illustrates the result of the mapping of the micropatch transposed convolution. The equations for each point can be deduced from FIG. 6. The results for other points follow the same logic as the example on point 1.

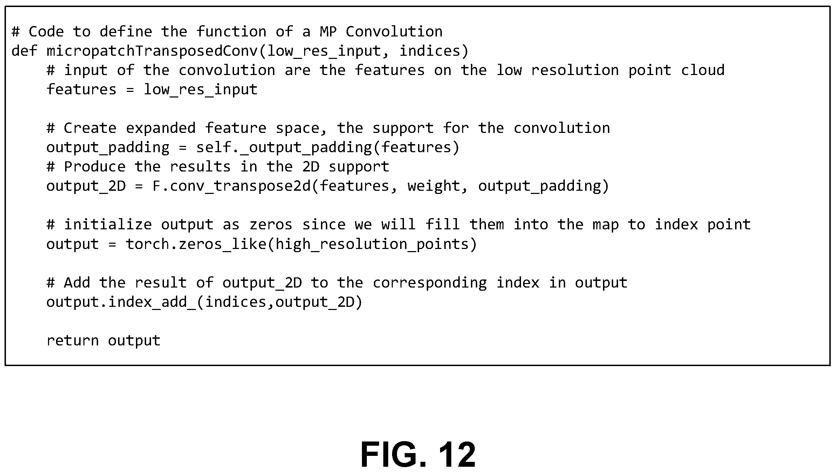

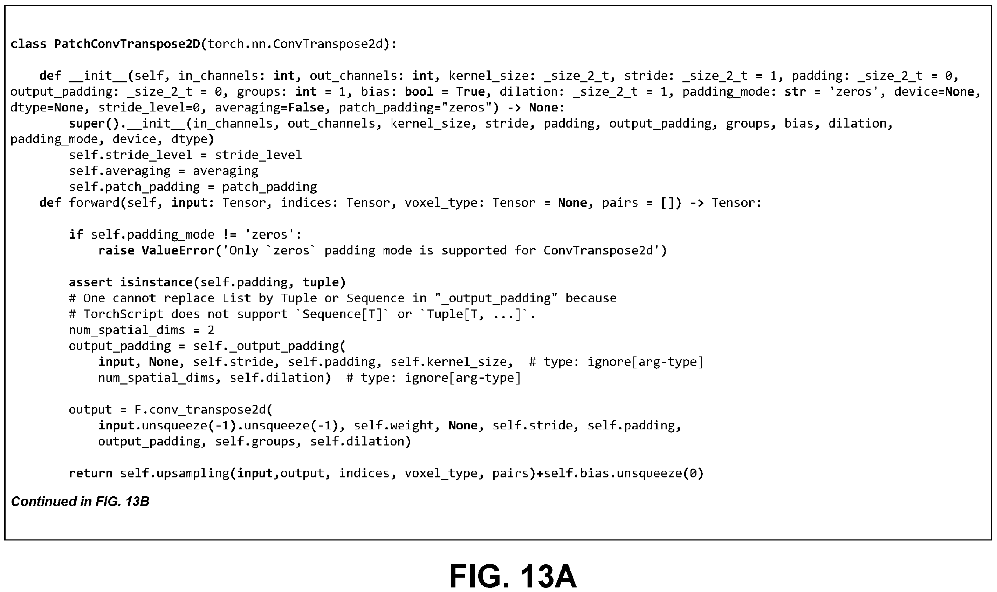

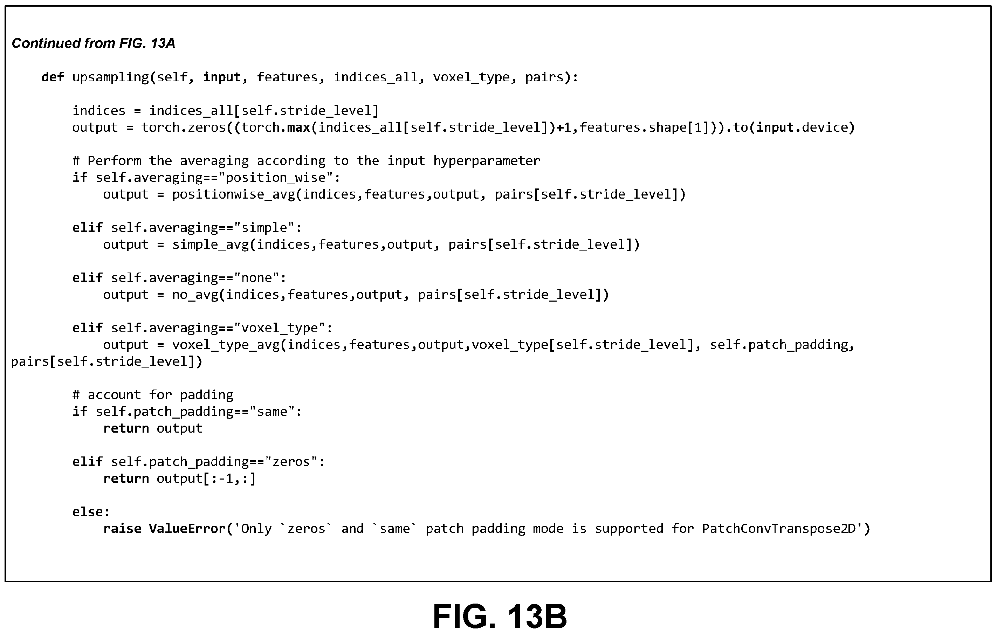

An example of code for micropatch transposed convolution is provided in FIG. 12. Code for the definition of the class "PatchConvTranspose2D" is provided in FIGs. 13A-13B.

After the transposed convolution is performed, example embodiments employ post-processing methods for the handling of overlapping feature spaces. One difference between micropatch convolution and conventional 2D convolution is that in the micropatch convolution, there is an irregularity of the appearances of the points in the transposed convolution. This irregularity is not an issue during the downsampling and conventional 2D convolutions.

In a method according to some embodiments, a plurality of micropatches are decoded, each micropatch having a plurality of pixels. For example, as illustrated in FIG. 6, micropatches 602, 604, 606, and 608 are decoded, each of which is a 3×3 array of pixels. At least one pixel of each micropatch is associated with a respective point in a point cloud. For example, pixels in micropatch 602 are associated with points having indices 0, 1, 2 and 3. Each pixel in a micropatch that is associated with a respective point has a pixel feature value. The pixel feature value may be obtained by performing a multiplication between a feature value associated with the micropatch and a two-dimensional kernel 610. In the example of FIG. 6, the two-dimensional kernel 610 is a 3×3 array of weights labeled W₀ through W₈.

The feature value associated with the micropatch may be a feature value associated with a point in a downsampled version of the point cloud. For example, the micropatch feature value of micropatch 602 may be the feature value of point 0' in the downsampled point cloud. For simplicity, the primed notation (0', 4', 5', 7' and the like) will represent both an identifier of the corresponding point in the downsampled point cloud and the feature value of the corresponding point, as will be clear from context. Thus, to give specific examples, the pixel feature value of pixel 612 is given by (0')·W₅, and the pixel feature value of pixel 612 is given by (4')·W₀.

At least a first point in the point cloud is associated with respective pixels in each of a first plurality of the micropatches. For example, the point with index 1 is associated with pixel 612 in micropatch 602 and with pixel 614 in micropatch 604. The point feature value for a point is calculated as a weighted sum of the pixel feature values of the pixels associated with that point. For example, the point feature value for the point with index 1 is given by a weighted sum of (0')·W₅ and (4')·W₀.

FIG. 7 illustrates the calculation of point feature values for points with indices 0 through 8 in an embodiment where the pixel feature values are weighted equally. However, as described in further detail below, some embodiments use further post-processing to determine different weights for the different pixel feature values.

In one example of a postprocessing technique, a normalization is performed on the result after the transposed convolution if the number of times a certain index appears is greater than a threshold value referred to herein as the averaging factor, F. This averaging factor can be determined in advance as a hyperparameter of the network (e.g. known in advance to both the encoder and decoder).

As an example, consider an embodiment in which the averaging factor, F, has a value of 3. In that case, every point that appears more than 3 times will have its resulting value weighted to match the averaging factor. In the example of FIG. 7, the point indexed by "3" appears more times than the averaging factor. In that case, the result is divided by the number of times it appears and multiplied by the averaging factor that was previously decided. The new result is shown in FIG. 8.

Some embodiments employ multiple averaging factors. All the values that are greater than the average factor will be averaged to the closest value that is smaller.

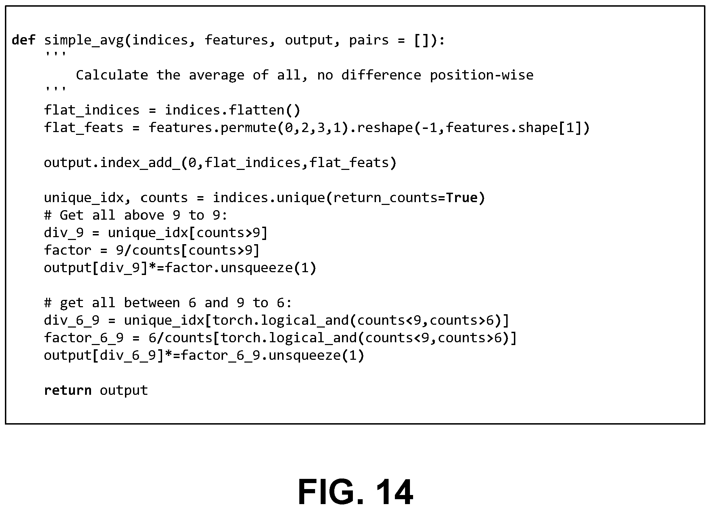

An example of code for implementing such a technique is provided in FIG. 14.

Some such embodiments may be implemented as follows. The number, C, of pixel feature values associated with the relevant point is counted or otherwise determined. For instance, in the example of FIG. 6, only one pixel feature value is associated with the point having index 0, so C=1 for that point. Two pixel feature values (i.e. those of pixels 612 and 614) are associated with the point having index 1, so C=2 for that point. Four pixel feature values are associated with the point having index 3 (i.e. one pixel in each of the four micropatches 602, 604, 606, 608), so C=4 for that point.

For at least one point point, an averaging factor, F, is determined, where C>F. In the calculation of the weighted sum for that point, the sum of the associated pixel feature values is multiplied by F/C. For example, consider the point with index 3 in a case where the averaging factor, F, is equal to three. As noted above, C=4 for that point, so as illustrated in FIG. 8, the sum of micropatch feature values is multiplied by F/C, or % in this case.

In some embodiments, the averaging factor, F, to use for a particular point is determined by selecting, from among a plurality of available averaging factors, a greatest averaging factor less than the value of C for that point.

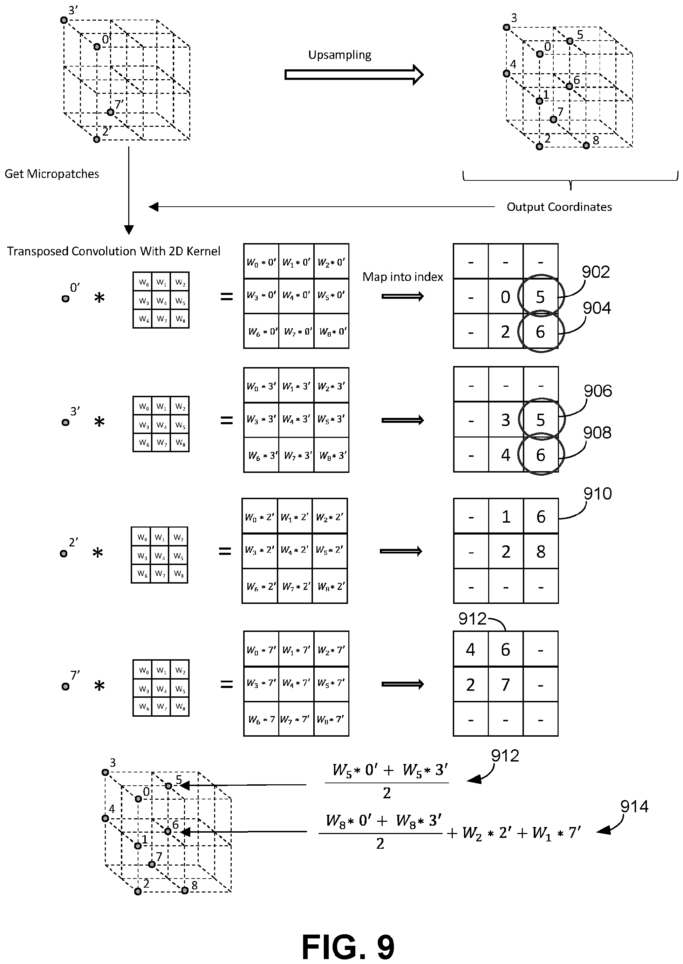

In some embodiments, weighting is performed based on the principle of preventing an index from appearing in the same position more than N times, where N is a threshold number. After the points are mapped to the index, if one point appears in the same position in the mapping more than once, it is divided by the number of times it appears in said position before being added to the final result. An example of such a calculation is illustrated in FIG. 9. FIG. 9 illustrates transposed convolution with position-wise averaging. Since points 5 and 6 appeared in the same spatial position on the micropatches, the resulting feature is normalized on that position only.

Such an embodiment may be implemented as follows. Each of the associated pixels in the first plurality of the micropatches has a corresponding position within the respective micropatch. For example, pixels 902 and 906 are both in the center-right position of their respective micropatches, while pixels 904 and 908 are both in the bottom-right position of their respective micropatches. For each point, there is a number, N, of the associated pixels have a same position in their respective micropatch. For example, the point associated with index 5 is associated with two pixels having the same position. The point associated with index 6 is also associated with two pixels having the same position (and with two more pixels 910, 912 having different positions). In this embodiment, the calculation of the weighted sum includes weighting the pixel feature values of the pixels having the same position by 1/N. For example, the point feature value of the point with index 5 is calculated according to formula 912, in which the pixel feature values (0')·W₅ and (3')·W₅ are both weighted by ½. The point feature value of the point with index 6 is calculated according to formula 914, in which the pixel feature values (0')·W₈ and (3')·W₈ are both weighted by ½ because those values are both associated with the same position (the bottom-right position of pixels 904, 908), while the pixel feature values from other positions, namely values (2')·W₂ and (7')·W₁ (from pixels 910 and 912, respectively), are each weighted by 1.

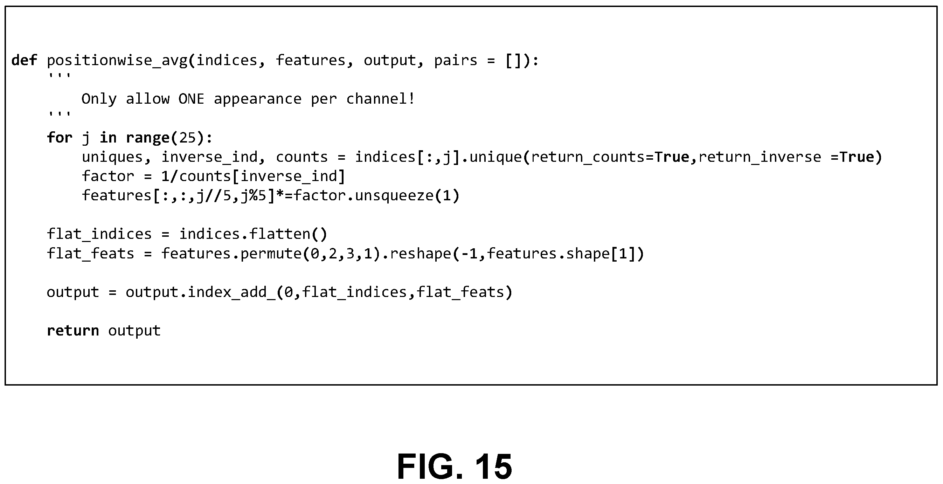

An example of code for implementing a position-wise averaging is provided in FIG. 15.

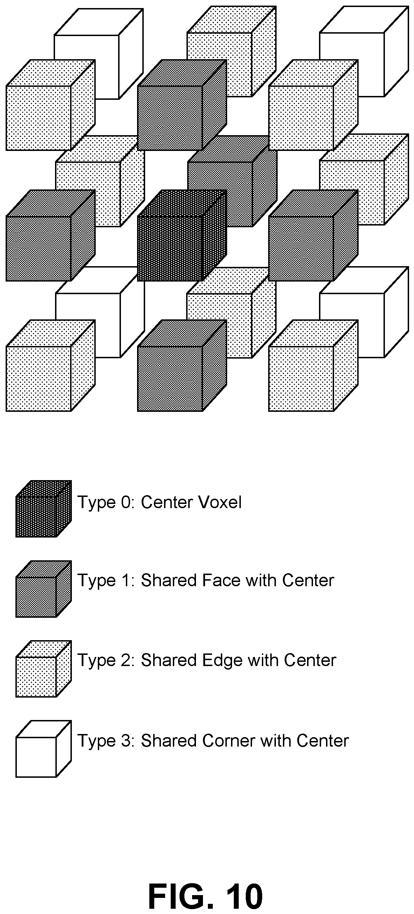

In some embodiments, an averaging is performed based on the type of voxel of the geometry of the point cloud. The type of voxel may be determined during the downsampling process. Different voxel types are illustrated in FIG. 10. A voxel at the center of the downsampling point may be identified as "Type 0." A voxel that shares a face with the center voxel may be identified as "Type 1." A voxel that shares an edge (but not a face) with the center voxel may be identified as "Type 2." A voxel that shares a corner (but not an edge) with the center voxel may be identified as "Type 3." Other geometry-based type classifications may alternatively be used.

A weighting process may be performed as described above using different averaging factors, F, for different voxel types. Thus, every voxel that is of type 0 will be averaged by the averaging factor defined by the voxel type 0. The factor may still be a hyperparameter, but it now applies differently on the voxels.

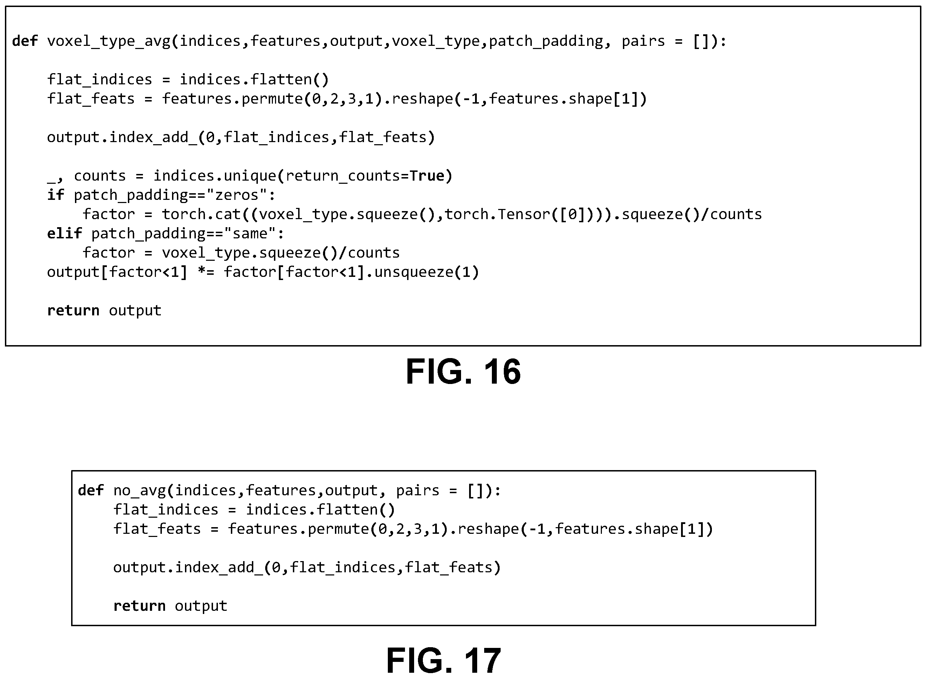

An example of code for implementing a voxel-type averaging is provided in FIG. 16.

In some embodiments, each of the micropatches has a respective center point, which is a point in the point cloud, and at least one weight used in calculating the weighted sum is based at least in part on a geometric relationship between the first point and the center point of a micropatch. In some such embodiments, the first point is in a first voxel, the center point is in a second voxel, and at least one of the weights is based at least in part on whether the first and second voxels are the same voxel, whether the first and second voxels share a face, whether the first and second voxels share an edge, or whether the first and second voxels share a corner.

In some embodiments, a sum of feature spaces is used without different weights for different contributions. An example of code for implementing such an embodiment is provided in FIG. 17.

Example embodiments allow for the use of a micropatch approach to the feature extraction of a point cloud coding architecture, instead of using sparse convolutions throughout the model. This approach can be applied to various different types of coding architecture. The use of micropatches allows for the architecture to rely on 2D convolutions (such as the ones used for image compression). In some embodiments, a signaling flag indicating which deep decoder architecture to use is present in the bitstream. Additional flags may be used indicate which type of convolutions are used and the type of post-processing. Table 1 represents an example of signaling the use of the VAE, normalizing flow or wavelet in a point cloud learning-based bitstream.

| | | |
|---|---|---|
| PHOTOMETRY_CODEC_ARCHITECTURE | 00 -> use Variational Auto-Encoder | 2 bit flag |
| | 01 -> use Normalizing flow | |
| | 10 -> use Wavelet | |
| USE_MICROPATCH | 0 - > use sparse convolutions | 1 bit flag |
| | 1 -> use micropatch convolutions | |
| TRANSPOSE_CONV | 00-> regular transposed conv | 2 bit flag |
| | 01-> simple averaging | |
| | 10-> channel-wise averaging | |
| | 11-> voxel type averaging | |

Using example embodiments as described herein, convolutions would learn in the same type of support, which would be a 2D support, making it faster to learn patterns and contexts. The architecture becomes less heavy when compared to the full 3D architecture. For example, convolution kernels go from 3x3x3 to 3x3 or from 5x5x5 to 5x5. The training dataset can be enhanced with 2D images.

In an example embodiment, a plurality of micropatches are decoded. Each micropatch has a plurality of pixels. At least one pixel of each micropatch is associated with a respective point in a point cloud, and each pixel in a micropatch that is associated with a respective point has a pixel feature value. At least a first point in the point cloud is associated with respective pixels in each of a first plurality of the micropatches. The associated pixels in the first plurality of the micropatches have a first plurality of pixel feature values. A point feature value for the first point is determined by calculating a weighted sum of the first plurality of pixel feature values. In some embodiments, different pixel feature values have different weights.

In some embodiments, a decoding technique as described above is performed by an encoder, and a residual is determined, e.g. by subtracting the calculated point feature value from an input (e.g. from information representing attributes of an input point cloud). The residual is then encoded and provided to a decoder. The decoder decodes the residual and adds it to the feature values determined as described above to obtain reconstructed point cloud attributes.

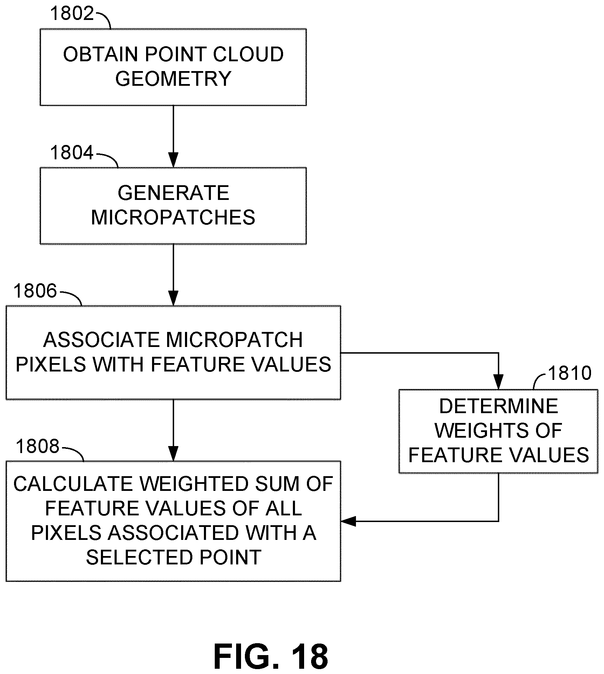

An example of a method performed in some embodiments is illustrated in FIG. 18. At 1802, a point cloud geometry is obtained. (At an encoder, this may involve obtaining an input point cloud to be encoded. At a decoder, this may involve decoding a point cloud geometry from a bitstream.) At 1804, micropatches are generated based on the point cloud geometry. Various micropatch generation techniques may be used, but in example embodiments the encoder and decoder apply the same technique to the same point cloud geometry information to obtain the same set of micropatches. At 1806, the pixels of the micropatch are associated with appropriate feature values, e.g. a micropatch pixel may be associated with a point in the point cloud, where the point has a feature value, so the micropatch pixel is associated with the feature value of the point. At 1808, the feature values of points in the point cloud are calculated as a weighted sum. Specifically, the feature value of a particular point is calculated as a weighted sum of the feature values of all pixels associated with that point. In an embodiment where unequal weighting is used, weights for the different feature values may be determined at 1808, based for example on the number of pixels associated with the point, the positions of the pixels associated with the point, the positions of the points associated with those pixels, and/or other factors.

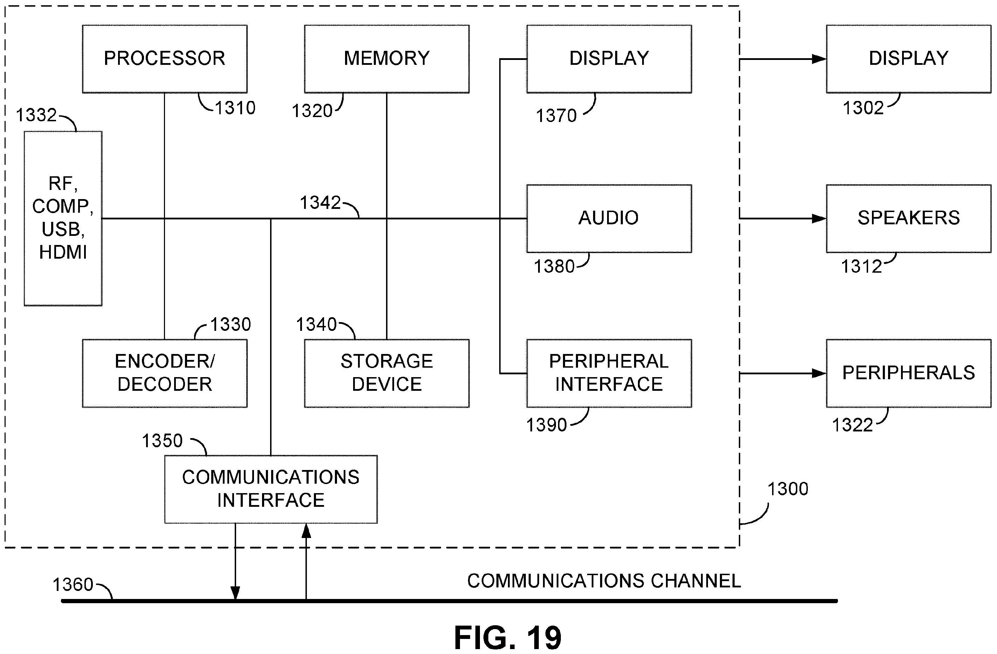

Some embodiments may be implemented on a system of one or more processors as illustrated in FIG. 19. FIG. 19 is a block diagram of an example of a system in which various aspects and embodiments are implemented. System 1300 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1300 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1300 can be provided through various input devices as indicated in block 1332. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1332 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement 1342, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1332. Still other embodiments provide streamed data to the system 1300 using the RF connection of the input block 1332. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1302, speakers 1312, and other peripheral devices 1322. The display 1302 of various embodiments includes one or more of, for example, a touchscreen display, an organic light-emitting diode (OLED) display, a curved display, and/or a foldable display. The display 1302 can be for a television, a tablet, a laptop, a cell phone (mobile phone), or other device. The display 1302 can also be integrated with other components (for example, as in a smart phone), or separate (for example, an external monitor for a laptop). The other peripheral devices 1322 include, in various examples of embodiments, one or more of a stand-alone digital video disc (or digital versatile disc) (DVR, for both terms), a disk player, a stereo system, and/or a lighting system. Various embodiments use one or more peripheral devices 1322 that provide a function based on the output of the system 1300. For example, a disk player performs the function of playing the output of the system 1300.

In various embodiments, control signals are communicated between the system 1300 and the display 1302, speakers 1312, or other peripheral devices 1322 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1302 and speakers 1312 can be integrated in a single unit with the other components of system 1300 in an electronic device such as, for example, a television. In various embodiments, the display interface 1370 includes a display driver, such as, for example, a timing controller (T Con) chip.

The display 1302 and speaker 1312 can alternatively be separate from one or more of the other components, for example, if the RF portion of input 1332 is part of a separate set-top box. In various embodiments in which the display 1302 and speakers 1312 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multi-core architecture, as non-limiting examples.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
obtaining a plurality of micropatches, each micropatch having a plurality of pixels,
wherein at least one pixel of each micropatch is associated with a respective point in a point cloud, and wherein each pixel in a micropatch that is associated with a respective point has a pixel feature value, and
wherein at least a first point in the point cloud is associated with respective pixels in each of a first plurality of the micropatches, the associated pixels in the first plurality of the micropatches having a first plurality of pixel feature values; and
determining a point feature value for the first point by calculating a weighted sum of the first plurality of pixel feature values.

2. An apparatus comprising one or more processors configured to perform at least:
obtaining a plurality of micropatches, each micropatch having a plurality of pixels,
wherein at least one pixel of each micropatch is associated with a respective point in a point cloud, and wherein each pixel in a micropatch that is associated with a respective point has a pixel feature value, and
wherein at least a first point in the point cloud is associated with respective pixels in each of a first plurality of the micropatches, the associated pixels in the first plurality of the micropatches having a first plurality of pixel feature values; and
determining a point feature value for the first point by calculating a weighted sum of the first plurality of pixel feature values.

3. The method of claim 1 or the apparatus of claim 2, wherein all of the first plurality of pixel feature values are weighted equally.

4. The method of claim 1 or the apparatus of claim 2, wherein at least two of the plurality of pixel feature values have different weights.

5. The method of claim 1 or the apparatus of claim 2, wherein weights used in calculating the weighted sum are based at least in part on a number of pixel feature values in the first plurality of pixel feature values.

6. The method of claim 1 or the apparatus of claim 2, further comprising determining a first number, C, of the first plurality of pixel feature values, and an averaging factor, F, where C>F, and wherein calculating the weighted sum comprises multiplying a sum of the first plurality of pixel feature values by F/C.

7. The method of claim 6 as it depends from claim 1, or the apparatus of claim 6 as it depends from claim 2, wherein determining the averaging factor, F, comprises selecting, from among a plurality of averaging factors, a greatest averaging factor less than C.

8. The method of claim 1 or the apparatus of claim 2, wherein weights used in calculating the weighted sum are based at least in part on positions within the first plurality of the micropatches of the pixels associated with the first point.

9. The method of claim 1 or the apparatus of claim 2, wherein each of the associated pixels in the first plurality of the micropatches has a corresponding position within the respective micropatch, wherein a number, N, of the associated pixels have a same position in their respective micropatch, and wherein calculating the weighted sum comprises weighting the pixel feature values of the pixels having the same position by 1/N.

10. The method of claim 1 or the apparatus of claim 2, wherein each of the micropatches has a respective center point in the point cloud, and wherein at least one weight used in calculating the weighted sum is based at least in part on a geometric relationship between the first point and the center point of a micropatch.

11. The method of claim 10 as it depends from claim 1, or the apparatus of claim 10 as it depends from claim 2, wherein the first point is in a first voxel, the center point is in a second voxel, and wherein at least one of the weights is based at least in part on whether the first and second voxels are the same voxel, whether the first and second voxels share a face, whether the first and second voxels share an edge, or whether the first and second voxels share a corner.

12. The method of claim 1 or the apparatus of claim 2, wherein, for at least a first one of the plurality of micropatches, obtaining the micropatch comprises:
obtaining a first micropatch feature value associated with the first micropatch;
determining the pixel feature values for the first micropatch by multiplying the first micropatch feature value by a two-dimensional kernel.

13. The method of claim 1 or any of claims 3-12 as they depend from claim 1, or the apparatus of claim 2 or any of claims 3-12 as they depend from claim 2, wherein the first micropatch feature value is a point feature value of a point in a downsampled point cloud.

14. The method of claim 1 or any of claims 3-13 as they depend from claim 1, or the apparatus of claim 2 or any of claims 3-13 as they depend from claim 2, wherein obtaining the plurality of micropatches comprises obtaining point cloud geometry information and generating the plurality of micropatches from the point cloud geometry information.

15. The method of claim 1 or any of claims 3-14 as they depend from claim 1, or the apparatus of claim 2 or any of claims 3-14 as they depend from claim 2, wherein the point feature value comprises color information for the corresponding point.
